# EUROPÄISCHE PATENTSCHRIFT

(11) **EP 1 985 899 B1**
(45) Veröffentlichungstag und Bekanntmachung des Hinweises auf die Patenterteilung: **10.01.2018**
(21) Anmeldenummer: 08162193.0
(22) Anmeldetag: 18.03.2005
(51) Int. Cl.: B08B 9/055, F16K 7/07, E04G 21/04

(54) **Quetschventil und dessen Verwendung**
Pinch valve and its use
Vanne à manchon et son utilisation

(30) Priorität: 26.03.2004 DE 102004015417
(43) Veröffentlichungstag der Anmeldung: 29.10.2008
(62) Teilanmeldung aus: 05716193.7
(73) Patentinhaber: Putzmeister Engineering GmbH, 72631 Aichtal (DE)
(72) Erfinder: Murthum, Ernst, 70771, Leinfelden-Echterdingen (DE); Bührer, Klaus, 70794, Filderstadt (DE); Wehner, Volker, 72108, Rottenburg (DE); Schuran, Max, 21220, Seevetal (DE)
(74) Vertreter: Pfiz/Gauss Patentanwälte PartmbB

(56) Entgegenhaltungen:
- EP-A1- 0 800 032
- EP-A2- 1 325 994
- DE-A1- 2 927 324
- DE-A1- 19 937 474
- US-A- 4 824 072
- US-B1- 6 283 680
- PATENT ABSTRACTS OF JAPAN Bd. 011, Nr. 34 (M-558), 31. Januar 1987 (1987-01-31) -& JP 61, 202098, A, (HITACHI LTD; OTHERS: 01), 6. September 1986 (1986-09-06)

## Beschreibung

Die Erfindung betrifft ein auf eine flexible Rohrleitung aufgeschobenes Quetschventil gemäß Oberbegriff des Anspruchs 1. Das Dokument EP-A2-1325994 offenbart ein auf eine flexible Rohrleitung, insbesondere einen Endschlauch einer Dickstoffförderleitung aufgeschobenes Quetschventil gemäß dem Oberbegriff des Anspruchs 1.

Dickstoffe wie Beton werden an ihrem Einsatzort ausgebracht, indem sie mittels einer Dickstoffpumpe von einem Materialaufgabebehälter durch eine zum Einsatzort führende Dickstoffförderleitung gepumpt werden. Nach dem Pumpeinsatz muß die Förderleitung vom in ihr verbliebenen Restmaterial entleert und sauber gereinigt werden. Das Restmaterial kann in den Materialaufgabebehälter zurückgepumpt werden. Dies hat jedoch den Nachteil, dass der zurückgepumpte Beton nicht verwertet werden kann und entsorgt werden muß. Bei langen Dickstoffförderleitungen kann zudem der Materialaufgabebehälter überlaufen. Aus diesem Grund wird in den meisten Fällen ein Reinigungskörper, wie beispielsweise eine Schwammkugel, eingangsseitig in die Dickstoffförderleitung eingeführt. Die Schwammkugel liegt vollumfänglich an der Innenfläche der Dickstoffförderleitung an und wird durch Beaufschlagung mit Druckluft oder Wasser durch die Dickstoffförderleitung bis zum Endschlauch hindurchbefördert. Dabei schiebt sie das in der Dickstoffförderleitung verbliebene Restmaterial vor sich her und drückt es ausgangsseitig aus dem Endschlauch heraus.

Die Verwendung von Wasser als Druckmedium hat hier den Nachteil, dass Restbeton durch das Wasser verdünnt wird und nicht verwertbar ist. Die Beaufschlagung der Schwammkugel mit Druckluft erfordert aus Sicherheitsgründen an der Austrittsöffnung eine Fangeinrichtung, die verhindert, dass die Schwammkugel nach dem Austritt aus dem Endschlauch Schäden anrichten kann. Die Fangeinrichtung wird beim Pumpbetrieb entfernt und nur beim Reinigungsbetrieb montiert. Ihr An- und Abbau ist bei größerer Einsatzhäufigkeit, wie z. B. bei fahrbaren Betonpumpen, umständlich und aufwendig.

Es ist daher Aufgabe der Erfindung, eine Vorrichtung und die Verwendung dieser Vorrichtung der eingangs genannten Art derart weiterzubilden, dass Reinigung einer Dickstoffförderleitung weniger Aufwand erfordert.

Die Aufgabe wird erfindungsgemäß durch ein auf eine flexible Rohrleitung aufgeschobenes Quetschventil mit den Merkmalen des Anspruchs 1 gelöst. Der erfindungsgemäßen Lösung liegt der Gedanke zugrunde, dass ein Reinigungskörper durch mindestens teilweises Verschließen eines Endschlauchs bereits in diesem aufgefangen wird, wenn ein großer Teil des Restmaterials bereits aus der Dickstoffförderleitung entfernt wurde. Zu diesem Zweck detektiert der Sensor über die Ermittlung der Konsistenzänderung des in einem Abschnitt der Dickstoffförderleitung befindlichen Materials, wenn der Reinigungskörper diesen Abschnitt erreicht. Dies kann dadurch geschehen, dass der Sensor die Ankunft des Reinigungskörpers in dem Abschnitt der Förderleitung erkennt. Eine weitere, einfachere Methode besteht darin, dass der Sensor erkennt, ob sich in dem Abschnitt der Dickstoffförderleitung überwiegend Dickstoff oder überwiegend das Fluid befinden. Der Sensor erkennt dann den Durchgang des Reinigungskörpers durch den Abschnitt daran, dass sich die Konsistenz des im Abschnitt enthaltenen Materials ändert: Zunächst ist in diesem Abschnitt Dickstoff, wie Beton, enthalten, nach Durchgang des Reinigungskörpers dann das Fluid.

Es ist prinzipiell möglich, als Fluid Wasser zu verwenden, wobei zur Durchleitung des Wassers eine Wasserpumpe verwendet wird. Es wird jedoch bevorzugt, dass als Fluid Luft verwendet wird und dass die Einrichtung zur Einleitung des Fluids einen Kompressor zur Erzeugung von Druckluft aufweist. Dadurch wird verhindert, dass der in der Dickstoffförderleitung verbliebene Restbeton verwässert wird. Der Restbeton kann dann größtenteils verwertet werden und muß nicht teuer entsorgt werden.

Der Sensor ist vorzugsweise ein die Dickstoffförderleitung mit Ultraschall beaufschlagender Ultraschallsensor. Über das von der Innenwand der Dickstoffförderleitung reflektierte Ultraschallsignal ermittelt der kalibrierte Sensor die Konsistenz des in der Leitung befindlichen Materials. Dabei ist der Sensor zweckmäßig auf die Erkennung mindestens zweier verschiedener Materialkonsistenzen kalibriert. Diese sind beispielsweise die Materialpaare Dickstoff/Fluid, Dickstoff/Reinigungskörper oder Fluid/Reinigungskörper. Der Reinigungskörper besteht dabei zweckmäßig aus einem kompressiblen Material. Er wird zweckmäßig über einen eingangsseitig an der Dickstoffförderleitung angeordneten Schieber eingeführt.

Es wird bevorzugt, dass der Endschlauch ein Mantelrohr aus elastomerem Material, vorzugsweise aus Gummi, aufweist, und dass die Verschlussöffnung ein Quetschventil zur Verengung der lichten Weite oder zum Verschluß des Endschlauchs aufweist. Wird der Endschlauch verschlossen, so wird ein Teil des Restbetons in ihm festgehalten. Besonders vorteilhaft ist, wenn lediglich die lichte Weite des Endschlauchs verengt wird, so dass der Reinigungskörper zwar hängen bleibt, aber durch eine verengte Öffnung noch einen Großteil des Restbetons aus dem Endschlauch hinausdrückt, der dann noch verwertet werden kann.

Das Quetschventil gemäß Anspruch 1 dient zum schnellen Verschließen des Endschlauchs bei Unterbrechung des Pumpvorgangs. So wird verhindert, dass Beton unkontrolliert aus dem Endschlauch heraustritt und die Umgebung verschmutzt. Das Quetschventil, das bevorzugt als Verschlusseinrichtung für eine Vorrichtung zur Reinigung einer Dickstoffförderleitung verwendet wird, zeichnet sich dadurch aus, dass es nachträglich auf eine beliebige flexible Rohrleitung, insbesondere einen Endschlauch einer Dickstoffförderleitung, aufgeschoben werden kann. Es unterliegt daher nicht dem Verschleiß durch Beaufschlagung mit in der Rohrleitung gefördertem Dickstoff. Desweiteren enthält es, mit Ausnahme des Ventils, keine starren Bestandteile, die eine Verletzungsgefahr darstellen können.

Der Schlauch ist an seiner dem Hohlraum abgewandten Außenseite zweckmäßig mit einer Textilgewebeschicht überzogen. Desweiteren ist er vorteilhafterweise in eine Manschette aus elastomerem Material eingebettet. Die Manschette schließt vorzugsweise ebenfalls die Hülle ein. Dies verleiht dem Quetschventil eine erhöhte Formstabilität. Die Manschette hat zweckmäßig die Form eines Hohlzylinders. Dabei muß der Innendurchmesser mindestens so groß sein wie der Außendurchmesser der ebenfalls zylinderförmigen Rohrleitung. Die Hülle besteht vorteilhafterweise aus einem vorzugsweise mehrlagigen Textilgewebe. In der Einlass- und Auslassöffnung ist zweckmäßig ein Ventil angeordnet, so dass der Hohlraum leicht mit Gas befüllt und wieder entleert werden kann.

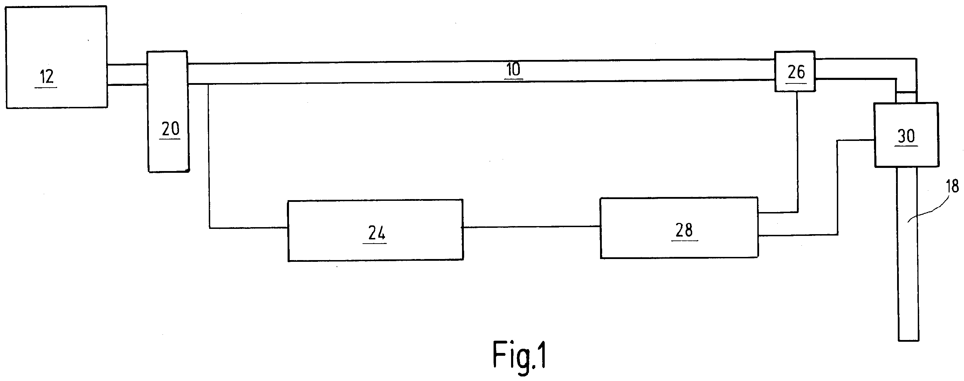

Im Folgenden wird die Erfindung anhand eines in der Zeichnung schematisch dargestellten Ausführungsbeispiels näher erläutert. Es zeigen
- Fig. 1: eine schaubildliche Darstellung einer Vorrichtung zur Reinigung einer Dickstoffförderleitung;
- Fig. 2: eine perspektivische Darstellung eines Endschlauchs der Dickstoffförderleitung mit einer Vorrichtung gemäß Fig. 1;
- Fig. 3: ein Quetschventil im Schnitt.

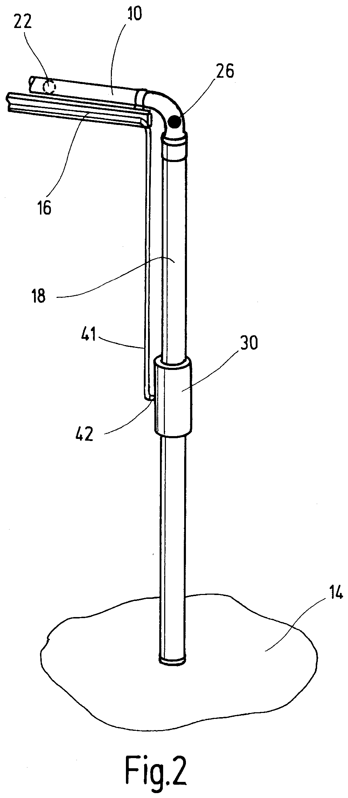

Eine Dickstoffförderleitung 10 ist dazu bestimmt, Dickstoff, wie Beton, von einem Materialaufgabebehälter 12 zu einer Ausbringstelle 14 zu leiten. Sie ist an einem Mast montiert, dessen endseitiger Mastarm 16 in Fig. 2 dargestellt ist, und trägt an ihrem austrittsseitigen Ende einen Endschlauch 18 aus Gummi. Zur Reinigung nach dem Pumpbetrieb wird eintrittsseitig über einen Schieber 20 ein Reinigungskörper 22 in Form einer kompressiblen, vollumfänglich an die Innenwand der Dickstoffförderleitung 10 anliegenden Schwammkugel eingebracht. Der Schieber 20 sperrt gleichzeitig die Dickstoffförderleitung 10 zum Materialaufgabebehälter 12 ab. Mittels eines Kompressors 24 wird Druckluft in die Dickstoffförderleitung eingeleitet, die die Schwammkugel 22 durch die Dickstoffförderleitung 10 in Richtung Endschlauch 18 drückt. In der Dickstoffförderleitung 10 verbliebener Restbeton wird dabei durch die Schwammkugel 22 über den Endschlauch 18 entfernt. In einem Abschnitt der Dickstoffförderleitung 10 ist nahe dem Endschlauch 18 ein Ultraschallsensor 26 angeordnet, der die Innenwand der Dickstoffförderleitung 10 mit Ultraschall beaufschlagt. Der von der Innenwand reflektierte und vom Sensor 26 gemessene Ultraschall erfährt eine Änderung, wenn sich die Konsistenz des in dem den Sensor tragenden Abschnitt der Dickstoffförderleitung 10 befindlichen Materials ändert. Dies ist dann der Fall, wenn die Schwammkugel 22 den Sensor 26 passiert. Die Schwammkugel 22 schiebt vor sich eine Säule von Restbeton, hinter der Schwammkugel 22 befindet sich überwiegend Druckluft. Die vom Sensor 26 gemessene Konsistenzänderung von Beton auf Luft wird vom Sensor erkannt, der ein Signal an eine Steuerungseinheit 28 übermittelt.

Der Endschlauch 18 trägt ein Quetschventil 30, das bei Betätigung seinen Innenquerschnitt verengt oder verschließt. Das Quetschventil 30 wird durch die Steuerungseinheit 28 betätigt, wenn diese das die Konsistenzänderung charakterisierende Signal vom Sensor 26 erhält. Die Schwammkugel 22 bleibt an der verengten Stelle des Endschlauchs 18 hängen, während der vor der Schwammkugel 22 her geschobene Restbeton diese Stelle noch passieren kann und verwertet werden kann. Gleichzeitig mit der Betätigung des Quetschventils 30 schaltet die Steuerungseinheit 28 den Kompressor 24 ab. Zur Entfernung der Schwammkugel 22 aus dem Endschlauch 18 wird das Quetschventil 30 entspannt und die Dickstoffförderleitung 10 nochmals mit Druckluft beaufschlagt.

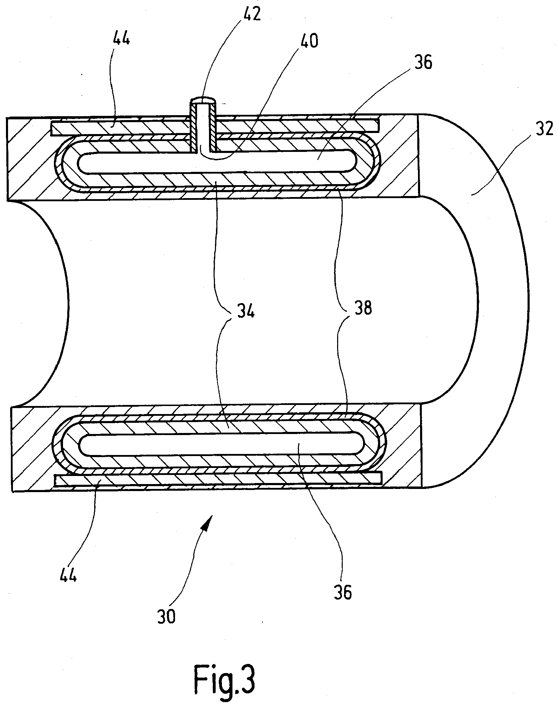

Das Quetschventil (Fig. 3) weist eine Manschette 32 aus einem elastomeren Material auf. Die Manschette 32 ist zylinderförmig und hat einen Innendurchmesser, der etwas größer ist als der Außendurchmesser des Endschlauchs 18, so dass das Quetschventil 30 auf diesen aufgeschoben werden kann. In die Manschette 32 ist ein Schlauch 34 aus einem Elastomerwerkstoff eingebettet, der einen ringförmigen Hohlraum 36 begrenzt. Der Schlauch 34 ist an seiner Außenseite mit einer Textilgewebeschicht 38 überzogen. Er weist zudem eine Öffnung 40 auf, über die er über eine Leitung 41 (Fig. 2) mit Gas, insbesondere Druckluft, befüllbar ist. In der Einlass- und Auslassöffnung 40 ist ein Ventil 42 angeordnet. In die Manschette 32 ist eine ringförmige Hülle 44 eingebettet, in deren Innerem der Schlauch 34 aufgenommen ist. Die Hülle 44 besteht aus mehreren Lagen eines Textilgewebes und ist dadurch schlechter verformbar als die Textilgewebeschicht 38. Bei Betätigung des Quetschventils wird über das Ventil 42 Druckluft in den Hohlraum 36 eingeleitet, so dass der Schlauch 34 gedehnt wird. Die Hülle 44 schränkt die Ausdehnung des Schlauchs 34 in radialer Richtung nach außen ein, so dass das Befüllen des Hohlraums 36 mit Druckluft eine Verringerung des Innendurchmessers der Manschette 32 bewirkt. Diese Verengung überträgt sich auf den durch die Manschette 32 verlaufenden flexiblen Endschlauch 18, so dass durch Betätigung des Quetschventils 30 seine lichte Weite verringert bzw. der Endschlauch 18 verschlossen werden kann.

Zusammenfassend ist folgendes festzuhalten: Die Erfindung ist verwendbar in einer Vorrichtung zur Reinigung einer Dickstoffförderleitung 10 mit einem austrittsseitig angebrachten Endschlauch 18, welche eine Einrichtung 24 zur Einleitung eines unter Druck stehenden Fluids in die Dickstoffförderleitung 10 und einen Reinigungskörper 22 aufweist, der mittels Fluidbeaufschlagung an der Innenfläche der Dickstoffförderleitung 10 vollumfänglich anliegend durch diese hindurchbeförderbar ist. Die Vorrichtung weist einen Sensor 26 zur Ermittlung der Konsistenz des in einem Abschnitt der Dickstoffförderleitung 10 befindlichen Materials, eine Steuerungseinheit 28, an die bei einer Änderung der Konsistenz des Materials vom Sensor 26 ein Signal übertragbar ist, und eine bei Erhalt des Signals durch die Steuerungseinheit betätigbare Verschlusseinrichtung 30 zum mindestens teilweisen Verschließen des Endschlauchs 18 auf.

## Patentansprüche

1. Auf eine flexible Rohrleitung, insbesondere einen Endschlauch (18) einer Dickstoffförderleitung (10) aufgeschobenes Quetschventil (30), das einen von einem Elastomerwerkstoff begrenzten ringförmigen Hohlraum (36) aufweist, der an eine Einlass- und Auslassöffnung (40) zum Befüllen und Entleeren mit einem unter Druck stehenden Gas angeschlossen ist, und der eine ringförmige, den Hohlraum (36) in ihrem Inneren aufnehmende, die Ausdehnung des Elastomerwerkstoffs in radialer Richtung nach außen hindernde Hülle (44) aufweist, **gekennzeichnet durch** einen den Hohlraum (36) umschließenden ringförmigen Schlauch (34) aus dem Elastomerwerkstoff, der in eine die Hülle (44) umschließende Manschette (32) aus elastomerem Material mit der Form eines Hohlzylinders eingebettet und dort eingeschlossen ist, wobei der Innendurchmesser der Manschette (32) mindestens so groß ist wie der Außendurchmesser der Rohrleitung oder des Endschlauchs.

2. Quetschventil nach Anspruch 1, **dadurch gekennzeichnet, dass** der Schlauch (34) an seiner dem Hohlraum (36) abgewandten Außenseite mit einer Textilgewebeschicht (38) überzogen ist.

3. Quetschventil nach einem der Ansprüche 1 oder 2, **dadurch gekennzeichnet, dass** die Hülle (44) aus einem vorzugsweise mehrlagigen Textilgewebe besteht.

4. Quetschventil nach einem der Ansprüche 1 bis 3, **dadurch gekennzeichnet, dass** in der Einlass- und Auslassöffnung (40) ein Ventil (42) angeordnet ist.

5. Verwendung des Quetschventils nach einem der Ansprüche 1 bis 4 für eine Vorrichtung zur Reinigung einer Dickstoffförderleitung (10), welche einen austrittseitig angebrachten, ein Mantelrohr aus elastomerem Material, vorzugsweise aus Gummi, aufweisenden Endschlauch (18), einen vollumfänglich an der Innenfläche der Dickstoffförderleitung (10) anliegenden Reinigungskörper (22), eine Einrichtung (24) zur Einleitung eines unter Druck stehenden Fluids in die Dickstoffförderleitung (10) zur Beaufschlagung des Reinigungskörpers (22) und zur Beförderung des Reinigungskörpers (22) durch die Dickstoffförderleitung (10), eine Verschlusseinrichtung (30) zum mindestens teilweisen Verschließen des Endschlauchs (18) und einen Sensor (26) zur Ermittlung der Konsistenz des in einem Abschnitt der Dickstoffförderleitung (10) befindlichen Materials und zur Übermittlung eines eine Konsistenzänderung charakterisierenden Signals an eine Steuerungseinheit (28) zur Betätigung der Verschlusseinrichtung (30) aufweist, wobei das Quetschventil Bestandteil der Verschlusseinrichtung (30) ist und dazu bestimmt ist, die lichte Weite des Endschlauchs (18) zu verengen oder zu verschließen.

6. Verwendung des Quetschventils nach einem der Ansprüche 1 bis 4 bei einem Verfahren zum Reinigen einer Dickstoffförderleitung (10) mit austrittsseitig angebrachtem Endschlauch (18), der ein Mantelrohr aus elastomerem Material, vorzugsweise aus Gummi, aufweist, wobei ein unter Druck stehendes Fluid in die Dickstoffförderleitung (10) eingeleitet wird, wobei ein Reinigungskörper (22) mittels Beaufschlagung durch das Fluid an der Innenfläche der Dickstoffförderleitung (10) vollumfänglich anliegend durch diese hindurch befördert wird, wobei mittels eines Sensors (26) die Konsistenz des in einem Abschnitt der Dickstoffförderleitung (10) befindlichen Materials ermittelt wird, wobei der Sensor (26) bei einer Änderung der Konsistenz des Materials ein Signal an eine Steuerungseinheit (28) überträgt, und wobei die Steuerungseinheit (28) bei Erhalt des Signals das Quetschventil (30) betätigt, durch dessen Betätigung die lichte Weite des Endschlauchs (18) verengt oder der Endschlauch (18) verschlossen wird.

## Claims

1. Pinch valve (30) pushed onto a flexible tube line, in particular onto an end hose (18) of a thick-matter delivery line (10), said valve having an annular cavity (36) which is delimited by an elastomer material and which is connected to an inlet and outlet opening (40) for filling and emptying with a pressurized gas, and having an annular enclosure (44) which contains the cavity (36) in its interior and which hinders the expansion of the elastomer material outward in the radial direction, **characterized by** an annular hose (34) surrounding the cavity (36), which hose is composed of the elastomer material and is embedded in a collar (32), which collar surrounds the enclosure (44) and is composed of elastomer material and has the form of a hollow cylinder, and is enclosed there, wherein the inner diameter of the collar (32) is at least as large as the outer diameter of the tube line or the end hose.

2. Pinch valve according to Claim 1, **characterized in that** the hose (34) is covered with a textile fabric layer (38) on its outer side which is remote from the hollow space (36).

3. Pinch valve according to either of Claims 1 and 2, **characterized in that** the enclosure (44) consists of a, preferably multi-layered, textile fabric.

4. Pinch valve according to one of Claims 1 to 3, **characterized in that** a valve (42) is arranged in the inlet and outlet opening (40).

5. Use of the pinch valve according to one of Claims 1 to 4 for a device for cleaning a thick-matter delivery line (10), having an end hose (18) which is attached on the outlet side and which has a casing tube composed of elastomer material, preferably of rubber, having a cleaning body (22) which bears over the full circumference against the inner surface of the thick-matter delivery line (10), having a device (24) for introducing a pressurized fluid into the thick-matter delivery line (10) in order for the cleaning body (22) to be acted upon and for the cleaning body (22) to be transported through the thick-matter delivery line (10), having a closure device (30) for at least partially closing off the end hose (18), and having a sensor (26) for determining the consistency of the material situated in a section of the thick-matter delivery line (10) and for transmitting a signal, characterizing a change in consistency, to a control unit (28) in order to actuate the closure device (30), wherein the pinch valve is a constituent part of the closure device (30) and is intended for narrowing or closing off the internal width of the end hose (18).

6. Use of the pinch valve according to one of Claims 1 to 4 in a method for cleaning a thick-matter delivery line (10) having an end hose (18) which is attached on the outlet side and which has a casing tube composed of elastomer material, preferably of rubber, wherein a pressurized fluid is introduced into the thick-matter delivery line (10), wherein a cleaning body (22) is transported, such that is bears over the full circumference against the inner surface of the thick-matter delivery line (10), through said line by means of action of the fluid, wherein the consistency of the material situated in a section of the thick-matter delivery line (10) is determined by means of a sensor (26), wherein the sensor (26) transmits a signal to a control unit (28) when the consistency of the material changes, and wherein the control unit (28) actuates the pinch valve (30) when the signal is received, as a result of the actuation of which the internal width of the end hose (18) is narrowed or the end hose (18) is closed off.

## Revendications

1. Vanne à manchon (20) chaussée sur une conduite tubulaire flexible, en particulier un tuyau d'extrémité (18) d'une conduite de transport de liquides épais (10), qui présente une cavité annulaire (36) limitée par un matériau élastomère, qui est raccordée à une ouverture d'entrée et de sortie (40) pour la remplir et la vider avec un gaz se trouvant sous pression, et qui présente une enveloppe annulaire (44), contenant intérieurement la cavité (36) et empêchant la dilatation du matériau élastomère en direction radiale vers l'extérieur, **caractérisée par** un tuyau flexible annulaire (34) constitué du matériau élastomère et entourant la cavité (36), qui est noyé dans une manchette (32) en matériau élastomère entourant l'enveloppe (44) et présentant la forme d'un cylindre creux et qui y est inclus, dans laquelle le diamètre intérieur de la manchette (32) est au moins aussi grand que le diamètre extérieur de la conduite tubulaire ou du tuyau d'extrémité.

2. Vanne à manchon selon la revendication 1, **caractérisée en ce que** le tuyau flexible (34) est recouvert d'une couche de tissu textile (38) sur son côté extérieur opposé à la cavité (36).

3. Vanne à manchon selon une des revendications 1 ou 2, **caractérisée en ce que** l'enveloppe (44) est constituée d'un tissu textile de préférence à plusieurs couches.

4. Vanne à manchon selon l'une quelconque des revendications 1 à 3, **caractérisée en ce qu'**une soupape (42) est disposée dans l'ouverture d'entrée et de sortie (40).

5. Utilisation de la vanne à manchon selon l'une quelconque des revendications 1 à 4 pour un dispositif de nettoyage d'une conduite de transport de liquides épais (10), qui présente un tuyau d'extrémité (18) monté côté sortie, présentant un tube d'enveloppe en matériau élastomère, de préférence en caoutchouc, un corps de nettoyage (22) appliqué sur toute la périphérie sur la surface intérieure de la conduite de transport de liquides épais (10), un dispositif (24) pour introduire un fluide se trouvant sous pression dans la conduite de transport de liquides épais (10) pour activer le corps de nettoyage (22) et pour déplacer le corps de nettoyage (22) à travers la conduite de transport de liquides épais (10), un dispositif de fermeture (30) pour la fermeture au moins partielle du tuyau d'extrémité (18) et un capteur (26) pour détecter la consistance du matériau se trouvant dans une section de la conduite de transport de liquides épais (10) et pour transmettre un signal caractéristique d'un changement de consistance à une unité de commande (28) afin d'actionner le dispositif de fermeture (30), dans laquelle la vanne à manchon fait partie du dispositif de fermeture (30) et est destinée à étrangler ou à fermer la largeur libre du tuyau d'extrémité (18).

6. Utilisation de la vanne à manchon selon l'une quelconque des revendications 1 à 4 dans un procédé de nettoyage d'une conduite de transport de liquide épais (10) avec un tuyau d'extrémité (18) monté côté sortie, qui présente un tube d'enveloppe en matériau élastomère, de préférence en caoutchouc, dans laquelle on introduit un fluide se trouvant sous pression dans la conduite de transport de liquides épais (10), dans laquelle on déplace un corps de nettoyage (22) appliqué sur toute la périphérie sur la surface intérieure de la conduite de transport de liquides épais (10) à travers celle-ci par activation au moyen d'un fluide, dans laquelle on détermine au moyen d'un capteur (26) la consistance du matériau se trouvant dans une section de la conduite de transport de liquides épais (10), dans laquelle le capteur (26) transmet un signal à une unité de commande (28) lors d'un changement de la consistance du matériau, et dans laquelle, à la réception du signal, l'unité de commande (28) actionne la vanne à manchon (30), dont l'actionnement étrangle la largeur libre du tuyau d'extrémité (18) ou ferme le tuyau d'extrémité (18).
